# EUROPEAN PATENT SPECIFICATION

(11) **EP 4 357 527 B1**
(45) Date of publication and mention of the grant of the patent: **07.05.2025**
(21) Application number: 22203039.7
(22) Date of filing: 21.10.2022
(51) Int. Cl.: E01C 19/48

(54) **HYDRAULIC PAVER SYSTEM, A METHOD, AND A CONTROL UNIT FOR OPERATING AN ELECTRIC PAVER IN DIFFERENT OPERATION MODES, AN ELECTRIC PAVER FOR CONSTRUCTING A ROAD SURFACE, A COMPUTER PROGRAM, AND A COMPUTER READABLE MEDIUM**
HYDRAULISCHER STRASSENFERTIGER, VERFAHREN UND STEUEREINHEIT ZUM BETRIEB EINES ELEKTRISCHEN STRASSENFERTIGERS IN VERSCHIEDENEN BETRIEBSMODI
SYSTÈME HYDRAULIQUE DE FINISSEUSE, PROCÉDÉ ET UNITÉ DE COMMANDE POUR OPÉRER UNE FINISSEUSE

(43) Date of publication of application: 24.04.2024
(73) Proprietor: Ammann Schweiz AG, 4900 Langenthal (CH)
(72) Inventor: Kollanandi, Sanal Raj, 31789 Hameln (DE); Eschert, Philipp, 31789 Hameln (DE)
(74) Representative: Eisenführ Speiser

(56) References cited:
- EP-A1- 0 663 473
- WO-A1-2015/179078
- US-A- 3 453 939
- US-A1- 2015 361 627

## Description

### TECHNICAL FIELD

The invention relates to a hydraulic paver system for operating an electric paver in different operation modes. Further, the invention relates to an electric paver for constructing a road surface. Further, the invention relates to a method for operating an electric paver in different operation modes. Finally, the invention relates to a computer program and a computer readable medium.

### BACKGROUND

From US 8,356,958 B2 a paver is known that comprises a primary driving aggregate with a combustion engine, particularly a diesel engine, and functional units with hydraulic pumps, which are driven from a crankshaft of the combustion engine. DE 2 112 327 A1 relates to a paver with a hydraulic drive for a drive axle comprising an adjustable pump and hydraulic drives for working devices, such as conveyors, material distributors, screeds, vibrators and alike. EP 0 663 473 describes a hydraulic paver system for operating a paver in different modes, i. e. a transporting mode and a paving mode, wherein a first and a second hydraulic circuits are controlled independently from each other.

For different operation modes of pavers, it is known to provide different operation speeds of hydraulic pumps of a hydraulic paver system. This is usually realized by an internal combustion engine in combination with a transfer gearbox. However, the output speeds of the gearbox are permanently dependent on the input speed provided at the gear box from the internal combustion engine. This results in hydraulic losses in the hydraulic paver system, as each pump of the hydraulic system of the paver runs at the set speed requested by the highest consumer function of the hydraulic paver system. Thus, improvements of hydraulic paver systems are needed.

### SUMMARY

An object of the invention is to provide a hydraulic paver system, an electric paver, a method, a control unit, a computer program, and a computer readable medium to overcome the disadvantages outlined above. In particular, an object of the invention is to provide a hydraulic paver system, an electric paver, a method, a control unit, a computer program, and a computer readable medium that provides an increased efficiency when operating a paver to construct road surfaces.

According to a first aspect of the invention, the object is achieved by a hydraulic paver system according to claim 1.

The hydraulic paver system is configured for operating an electric paver in different operation modes. The operation modes are at least a transporting mode and a paving mode that is different to the transporting mode.

In the transporting mode the hydraulic paver system and, thus, the electric paver is operated without conducting paving operations. Such paving operations typically comprise but are not limited to operating the hopper, conveying paving material required for constructing the road surface along the direction of travel of the electric paver, distributing the paving material perpendicular to the direction of travel or operating the screed device of the electric paver. In the transporting mode, the hydraulic paver system is configured to be operated to drive the electric paver from a first position to a second position without paving, i.e. without conducting paving operations. For example, the hydraulic paver system may operate the electric paver in the transporting mode to unload the electric paver from a truck and to drive the electric paver to the place of the construction site where the road surface construction is to start. In another example, the hydraulic paver system may operate in the transporting mode in order to drive the electric paver to and on the truck after having finished the road surface construction. Finally, in a further example, the hydraulic paver system may operate in the transporting mode to drive the electric paver to a parking position or to drive the electric paver from a parking position to the place of the construction site where the road surface construction is to start. In all of these examples, the paver is driven between different locations without conducting paving operations.

In the paving mode, the electric paver is driven by means of the hydraulic paver system from a first position to a second position whilst paving. Thus, operating the hydraulic paver system in the paving mode means that the electric paver is conducting paving operations whilst being driven between the first position and the second position. In the paving mode, a road surface is constructed by conducting the paving operations whilst driving the electric paver between the first position and the second position.

To operate the electric paver in these different operation modes, the hydraulic paver system comprises a first hydraulic circuit and a second hydraulic circuit, which can be controlled independently of each other. In particular, the first hydraulic circuit can be controlled separate from the second hydraulic circuit. Mainly, the first hydraulic circuit is provided as drive system for driving the paver between two positions and the second hydraulic circuit is provided as drive system for actuating the paving operations.

Operating the hydraulic paver system and, thus, the electric paver in these different operation modes enables to reduce hydraulic losses and, in turn, enables to increase efficiency of the hydraulic paver system and, thus, the electric paver. This is realized as will be described in the following.

The first hydraulic circuit comprises a first hydraulic pump arrangement that is configured for providing a hydraulic driving power to at least one driving device for driving the electric paver. For example, the at least one driving device is some kind of hydraulic motor. For example, the first hydraulic pump arrangement may comprise at least one fixed displacement pump and/or at least one variable displacement pump and/or at least one screw pump and/or alike.

The first hydraulic pump arrangement is coupled to a first electric motor unit, which drives the first hydraulic pump arrangement in a transporting mode and/or in a paving mode for providing the hydraulic driving power. Preferably, the first hydraulic pump arrangement is coupled to the first electric motor unit in a material-locking and/or form-fitting and/or force-fitting manner. In particular, by coupling the first hydraulic pump arrangement to the first electric motor unit, the speed of the first hydraulic pump arrangement is proportional to the speed of the first electric motor unit. Most preferably, a gearbox between the first electric motor unit and the first hydraulic pump arrangement is not provided. In this case, the speed of the first hydraulic pump arrangement corresponds to the speed of the first electric motor unit. It may alternatively be preferred that a gearbox between the first electric motor unit and the first hydraulic pump arrangement is provided.

The first electric motor unit may be a synchronous or asynchronous motor.

The second hydraulic circuit comprises a second hydraulic pump arrangement that is configured for providing hydraulic working power for at least one working device of the electric paver for paving. For example, the at least one working device is some kind of actuation device, for example an auger device and/or a cylinder device and/or a conveyor device and/or alike. For example, the second hydraulic pump arrangement may comprise at least one fixed displacement pump and/or at least one variable displacement pump and/or at least one screw pump and/or alike.

The second hydraulic pump arrangement is coupled to a second electric motor unit, which drives the second hydraulic pump arrangement in the paving mode for providing the hydraulic working power. Preferably, the second hydraulic pump arrangement is coupled to the second electric motor unit in a material-locking and/or form-fitting and/or force-fitting manner. In particular, by coupling the second hydraulic pump arrangement to the second electric motor unit, the speed of the second hydraulic pump arrangement is proportional to the speed of the second electric motor unit. Most preferably, a gearbox between the second electric motor unit and the second hydraulic pump arrangement is not provided. In this case, the speed of the second hydraulic pump arrangement corresponds to the speed of the second electric motor unit. It may alternatively be preferred that a gearbox between the second electric motor unit and the second hydraulic pump arrangement is provided.

The second electric motor unit may be a synchronous or asynchronous motor.

Further, the hydraulic paver system comprises a control unit that is signalling coupled with the first hydraulic circuit and the second hydraulic circuit. Preferably, the control unit is or comprises a microprocessor with a memory and signalling inputs and signalling outputs. In particular, the control unit may be a personal computer or may be provided remote on a server.

The control unit is configured for operating the electric paver in the different operation modes depending on an operation mode selection input. The operation mode selection input may be provided by the user. For example, the user may select a desired operation mode via a touch screen or a button or alike, which may represent the operation mode selection input. Preferably, depending on the operation mode selection input, the control unit is configured to activate and/or deactivate the first hydraulic circuit and/or activate and/or deactivate the second hydraulic circuit. In particular, the control unit is configured to automatically activate and/or automatically deactivate the first hydraulic circuit and/or automatically activate and/or automatically deactivate the second hydraulic circuit depending on the operation mode selection input. Further preferably, the control unit is configured to activate and/or deactivate the first hydraulic circuit and/or activate and/or deactivate the second hydraulic circuit by default depending on the operation mode selection input.

In the transporting mode the first hydraulic circuit is activated and the second hydraulic circuit is deactivated. Preferably, independent on whether the hydraulic paver system and, thus, the electric paver is operated in transporting mode or paving mode, the first hydraulic circuit is activated automatically by default for driving the electric paver from a first position to a second position. In particular, the activated first hydraulic circuit is equivalent to a first hydraulic circuit that is turned on. Preferably, if the first hydraulic circuit is activated, the first hydraulic pump arrangement is driven by the first electric motor unit. In particular, if the first hydraulic circuit is activated, the first electric motor unit is turned on and running with a speed and, accordingly, the first hydraulic pump arrangement is turned on and running depending on the first electric motor unit.

It is to be understood that, preferably, if the hydraulic paver circuit is operated in the transporting mode, the second hydraulic circuit is deactivated, in particular turned off, by default. However, it may be preferred that second hydraulic circuit is activated manually in the transporting mode. For example, the second hydraulic circuit may be switched on manually by the user of the electric paver in the transporting mode. Preferably, in the transporting mode, the second electric motor unit and/or the second hydraulic pump arrangement is deactivated. It is to be understood that in the transporting mode, it may be preferred that the second electric motor unit is switched to a second electric generator unit and functions as a generator. In particular, in the transporting mode, when the second hydraulic circuit is deactivated, the second electric motor unit may function as an electric generator unit. If the second electric motor unit is switched to a second electric generator unit, the second electric motor unit does not provide any hydraulic power for the working devices. Rather, the working devices provide hydraulic power, which is transferred in the second electric generator unit into electricity.

In the transporting mode, the deactivated second hydraulic circuit provides a hydraulic standby power that is smaller than the hydraulic working power provided in the paving mode by the second hydraulic circuit. It may be preferred that the hydraulic standby power is zero. It is to be understood that if the second hydraulic circuit provides a standby power of zero, the deactivated second hydraulic circuit is equivalent to a second hydraulic circuit that is turned off. In particular, in the transporting mode, where the second electric motor unit functions as a second electro generator unit, the second electric motor unit does not provide any power for driving the working devices but consumes and, thus, transfers hydraulic power into electric power. Thus, in that regard, the standby power is understood to be negative when the second electric motor unit functions as the second electro generator unit, which is driven by the working devices.

By providing the first hydraulic pump arrangement in the first hydraulic circuit and by providing the second hydraulic pump arrangement in the second hydraulic circuit, a higher range of workings speeds is enabled independent on the different working scenarios. In particular, providing this first hydraulic circuit and this second hydraulic circuit allows to activate and/or deactivate the respective first and/or second electro motor unit and, thus, the respective hydraulic pump arrangements, which leads to reduced losses due to circulation of hydraulic fluid in the first and second hydraulic circuit.

Further, as the functions are divided up into the first and second hydraulic circuit, the speed of the first and second electro motor unit and, thus, of the first and second hydraulic pump arrangement may be controlled independent from each other, which further reduces hydraulic losses.

According to a preferred embodiment of the hydraulic paver system it is provided that in the paving mode the first hydraulic circuit is activated and the second hydraulic circuit is activated. Preferably, the second hydraulic circuit is turned on automatically by default if the hydraulic paver system and, thus, the electric paver is operated in paving mode. Additionally or alternatively, in the transport mode, it is provided that the second hydraulic circuit is turned off, in particular turned off automatically by default, and/or the second hydraulic circuit may be turned on manually by a user.

This preferred embodiment allows to deactivate, in particular turn off, any hydraulic circuits that are not needed. Deactivating or turning off the respective hydraulic circuits that comprise working devices that are not needed for a certain operation mode allows to reduce or stop hydraulic losses at the respective hydraulic pump arrangement

Further in a preferred embodiment of the hydraulic paver system it is provided that in the activated first hydraulic circuit the first electric motor unit is driving the first hydraulic pump arrangement, and/or in the deactivated first hydraulic circuit the first electric motor unit is not driving the first hydraulic pump arrangement, wherein preferably in the deactivated first hydraulic circuit the first electric motor unit is deactivated, and/or in the activated second hydraulic circuit the second electric motor unit is driving the second hydraulic pump arrangement, and/or in the deactivated second hydraulic circuit the second electric motor unit is not driving the second hydraulic pump arrangement, wherein preferably in the deactivated second hydraulic circuit the second electric motor unit is deactivated.

In another preferred embodiment of the hydraulic paver system, the first hydraulic circuit comprises at least one driving circuit, preferably two driving circuits, wherein the at least one driving circuit comprises at least one pump, preferably at least two pumps, in particular at least one variable displacement pump and/or at least one fixed displacement pump, wherein the first hydraulic pump arrangement comprises the at least one pump of the at least one driving circuit.

According in another preferred embodiment of the hydraulic paver system, the at least one driving circuit comprises at least two pumps, in particular the variable displacement pump and the fixed displacement pump, which are connected in parallel. Additionally or alternatively, it is further preferred that the at least one driving circuit comprises two variable displacement pumps, which are connected in parallel.

In yet a further preferred embodiment of the hydraulic paver system, the first hydraulic circuit comprises at least one tamper circuit and/or at least one cooling circuit, wherein the at least one tamper circuit comprises a pump, preferably a fixed displacement pump, that is part of the first hydraulic pump arrangement, wherein the pump of the at least one tamper circuit is configured for providing a hydraulic tamping power to a tamping device for tamping with the electric paver, and/or the at least one cooling circuit comprises a pump, preferably a fixed displacement pump, that is part of the first hydraulic pump arrangement, wherein the pump of the at least one cooling circuit is configured for providing a hydraulic flow to a cooling device for cooling the hydraulic fluid of the first hydraulic circuit, wherein preferably, the at least one tamper circuit and the at least one cooling circuit are the same circuit.

In particular, by this preferred embodiment it is ensured that sufficient flow for the cooling circuit is ensured, even though the second hydraulic pump arrangement is deactivated.

Further, according to another preferred embodiment of the hydraulic paver system, the pump or the pumps of the first hydraulic pump arrangement are coupled to the first electric motor unit, wherein preferably, the pumps of the first hydraulic pump arrangement that are coupled to the first electric motor unit, are connected in parallel.

According to a further preferred embodiment of the hydraulic paver system the working devices comprise at least one hydraulic conveyor actuation device for driving at least one conveyor device for conveying paving material along the direction of travel of the electric paver, wherein preferably, the paving material is conveyed in or against the direction of travel, and/or at least one hydraulic auger actuation device for driving at least one auger device for distributing the paving material crosswise to the direction of travel of the electric paver, and/or at least one hydraulic cylinder actuation device for lifting and/or extending a screed device of the electric paver and/or for opening a hopper and/or for closing the hopper, and/or at least one hydraulic tamper actuation device for driving at least one tamper device of the electric paver.

Additionally or alternatively, the second hydraulic circuit comprises at least one hydraulic working circuit, preferably at least two hydraulic working circuits, wherein the at least one hydraulic working circuit comprises at least one pump, and/or wherein the at least one hydraulic working circuit is at least one of the following:
- at least one conveyor circuit that is configured for providing hydraulic conveyor power for the at least one hydraulic conveyor actuation device for driving the at least one conveyor device of the electric paver,
- at least one auger circuit that is configured for providing hydraulic auger power for the at least one hydraulic auger actuation device for driving the at least one auger device of the electric paver,
- at least one cylinder circuit that is configured for providing hydraulic cylinder power for the at least one hydraulic cylinder actuation device for lifting and/or extending the screed device of the electric paver and/or for closing the hopper and/or for opening the hopper, and
- at least one tamper circuit that is configured for providing hydraulic tamper power for the at least one hydraulic tamper actuation device for driving the tamper device of the electric paver,
- at least one vibration circuit that is configured for providing hydraulic vibration power for the at least one hydraulic vibration actuation device for driving the vibration device of the electric paver
- wherein preferably the at least one auger circuit and the at least one conveyor circuit are the same hydraulic circuit.

According to yet another preferred embodiment of the hydraulic paver system, it is provided that the at least one cylinder circuit comprises a pump, preferably a variable displacement pump, and/or the at least one conveyor circuit comprises a pump, preferably a fixed displacement pump, the at least one auger circuit comprises a pump, preferably a fixed displacement pump, wherein preferably, in the case the at least one auger circuit and the at least one conveyor circuit are the same hydraulic circuit, the pumps of the at least one conveyor circuit and the at least one auger circuit are connected in parallel.

Further, according to a preferred embodiment of the hydraulic paver system, the pump of the at least one cylinder circuit and/or the pump of the at least one auger circuit and/or the pump of the at least one conveyor circuit and/or the pump of the at least one tamper circuit are coupled to the second electric motor unit, wherein preferably, the pumps of the at least one cylinder circuit and/or of the at least one auger circuit and/or the at least one conveyor circuit and/or the pump of the at least one tamper circuit are connected in parallel.

Yet according to a further preferred embodiment of the hydraulic paver system it is provided that the first hydraulic circuit comprises at least one hydraulic driving device, preferably two hydraulic driving devices, wherein each hydraulic driving device is fluidically connected on their input side to the at least one pump of the at least one driving circuit, so that the pump of the respective at least one driving circuit delivers a hydraulic fluid in the direction of the hydraulic driving device during operation of the electric paver, wherein the output side of each hydraulic driving device is fluidically connected to the input side of the at least one pump of the at least one driving circuit and/or a tank unit.

According to a further preferred embodiment of the hydraulic paver system, the first hydraulic circuit comprises the hydraulic tamper actuation device, wherein the hydraulic tamper actuation device is fluidically connected on its input side to the pump of the respective at least one tamper circuit, so that the pump of the respective at least one tamper circuit delivers a hydraulic fluid in the direction of the hydraulic tamper actuation device during operation of the paver, wherein the output side of each hydraulic tamper actuation device is fluidically connected to the tank unit, wherein preferably, a share of the hydraulic fluid is forwarded to the tank through the cooling device and/or through a filtering device.

This preferred embodiment has the particular advantage that no additional pump for circulating the hydraulic fluid within the respective hydraulic circuit is needed for cooling purposes.

Further, according to a preferred embodiment of the hydraulic paver system, the second hydraulic circuit comprises the hydraulic cylinder actuation device, wherein the hydraulic cylinder actuation device is fluidically connected on its input side to the pump of the respective at least one cylinder circuit, so that the pump delivers a hydraulic fluid in the direction of the hydraulic cylinder actuation device during operation, wherein the output side of each hydraulic cylinder actuation device is fluidically connected to the tank unit, and/or the second hydraulic circuit comprises the hydraulic auger actuation device, wherein the hydraulic auger actuation device is fluidically connected on its input side to the pump of the respective at least one auger circuit, so that the pump delivers a hydraulic fluid in the direction of the hydraulic auger actuation device during operation, wherein the output side of each hydraulic auger actuation device is fluidically connected to the tank unit, wherein preferably, a share of the hydraulic fluid is forwarded to the tank unit through the cooling device and/or through the filtering device, and/or the second hydraulic circuit comprises the hydraulic conveyor actuation device, wherein the hydraulic conveyor actuation device is fluidically connected on its input side to the pump of the respective at least one conveyor circuit, so that the pump delivers a hydraulic fluid in the direction of the hydraulic conveyor actuation device during operation, wherein the output side of each hydraulic conveyor actuation device is fluidically connected to the tank unit, wherein preferably, a share of the hydraulic fluid is forwarded to the tank unit through the cooling device and/or through the filtering device,
According to a further aspect of the invention, the object is achieved by an electric paver according to claim 14. The electric paver is configured for constructing a road surface. The electric paver comprises a hydraulic paver system according to the aspect and embodiments described herein.

As to the advantages, preferred embodiments and details of the electric paver, reference is made to the corresponding aspect and embodiments of the hydraulic paver system described herein above.

According to a further aspect of the invention, the object is achieved by method according to claim 15. The method is for operating a hydraulic paver system and, thus, an electric paver in different operation modes according to the aspect and embodiments of the hydraulic paver system described herein.

The method comprises following steps, wherein following steps are performed by the control unit: determining an operation mode selection input, and switching to the respective operation mode of the electric paver depending on the determined operation mode selection input, wherein the operation modes are at least a transporting mode and a paving mode that is different to the transporting mode, and when operating the electric paver in the transporting mode providing a transporting mode actuation signal for activating a first hydraulic circuit and deactivating a second hydraulic circuit, and/or when operating the electric paver in the paving mode providing a paving mode actuation signal for activating the first hydraulic circuit and activating the second hydraulic circuit.

As to the advantages, preferred embodiments and details of the method, reference is made to the corresponding aspect and embodiments of the hydraulic paver system and electric paver described herein above.

According to a preferred embodiment of the method it is provided that when operating the electric paver in the transporting mode or the paving mode controlling a travel speed of the electric paver by controlling the speed of the first electric motor unit and/or preferably, if the first hydraulic circuit comprises at least one driving circuit with at least one variable displacement pump, controlling a stroke out of the at least one variable displacement pump.

In a further preferred embodiment of the method it is provided that when operating the electric paver in the paving mode controlling a working speed of at least one working device by controlling the speed of the second electric motor unit and/or preferably depending on the travel speed of the electric paver and, preferably, if the second hydraulic circuit comprises at least one working circuit with at least one variable displacement pump, controlling a stroke out of the at least one variable displacement pump, depending on a paving width, a paving height and the paving speed.

According to a further aspect of the invention, the object is achieved by a computer program according to claim 18.

As to the advantages, preferred embodiments and details of the computer program, reference is made to the corresponding aspect and embodiments of the hydraulic paver system, the electric paver, the method, and the control unit described herein above.

According to a further aspect of the invention, the object is achieved by a computer readable medium according to claim 19.

As to the advantages, preferred embodiments and details of the computer readable medium, reference is made to the corresponding aspect and embodiments of the hydraulic paver system, the electric paver, the method and the computer readable medium described herein above.

Embodiments of the invention are now described below with reference to the drawings. These are not necessarily intended to show the embodiments to scale; rather, where useful for explanation, the drawings are in schematized and/or slightly distorted form. With regard to additions to the gauges directly recognizable from the drawings, reference is made to the relevant prior art. It should be borne in mind that a wide variety of modifications and changes concerning the shape and detail of an embodiment can be made without departing from the general idea of the invention. The features of the invention disclosed in the description, in the drawings as well as in the claims may be essential for the further development of the invention both individually and in any combination. In addition, all combinations of at least two of the features disclosed in the description, the drawings and/or the claims fall within the scope of the invention. The general idea of the invention is not limited to the exact form or detail of the preferred embodiments shown and described below, or limited to any subject matter that would be limited as compared to the subject matter claimed in the claims. In the case of stated design ranges, values lying within the stated limits are also intended to be disclosed as limiting values and to be capable of being used and claimed as desired. For simplicity, identical reference signs are used below for identical or similar parts or parts with identical or similar function.

Further advantages and advantageous features of the invention are disclosed in the following description and in the dependent claims.

### BRIEF DESCRIPTION OF THE DRAWINGS

With reference to the appended drawings, below follows a more detailed description of embodiments of the invention cited as examples.

In the drawings:
- Fig. 1: is a three-dimensional view of a paver in a preferred embodiment;
- Fig. 2: is a schematic circuit diagram of a preferred embodiment of the hydraulic paver system of a paver as shown in Figure 1;
- Fig. 3: is a schematic view of the core components of a further embodiment of the first hydraulic circuit 10; and
- Fig. 4: is schematic view of the core components of the second hydraulic circuit as schematically shown in the circuit diagram of the hydraulic paver system in Figure 2;
- Fig. 5: is a schematic block diagram depicting detailed example steps for controlling a hydraulic paver system and, thus, an electric paver in a transporting mode; and
- Fig. 6: is a schematic block diagram depicting detailed example steps for controlling a hydraulic paver system and, thus, an electric paver in a paving mode.

### DETAILED DESCRIPTION OF EXAMPLE EMBODIMENTS OF THE INVENTION

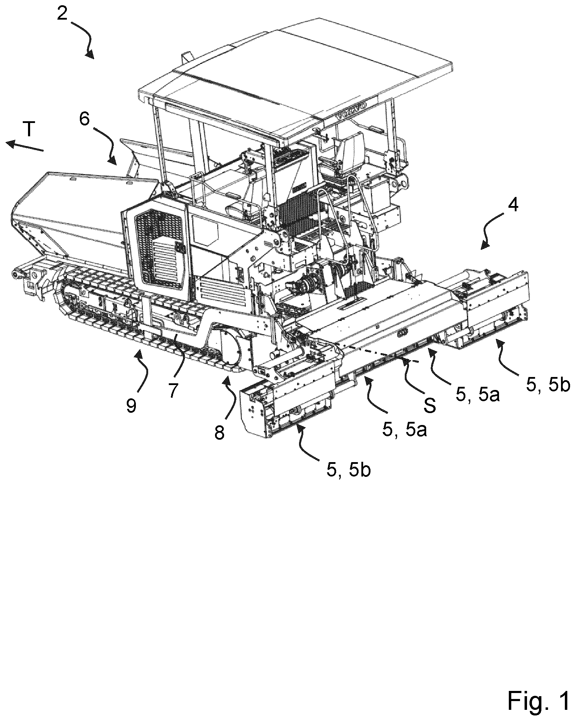

Figure 1 shows a vehicle 2 in form of an electric paver 2. Although the embodiment of the invention will be described with respect to the paver, the invention is not restricted to this particular heavy-duty vehicle. The invention may also be applied in other heavy-duty vehicles with similar requirements.

As can be seen, the electric paver 2 comprises one screed device 4 having several screed units 5 and a hopper 6.

With respect to the direction of travel T, the screed device 4 is arranged at the back of the electric paver 2 and the hopper 6 is arranged in the front for storing paving material required for paving in operation. For operation, i.e. to produce a road surface, the screed device 4 is arranged behind the paver 2 in the direction of travel T of the electric paver 2 and provided with the paving material stored in the hopper 6. Thus, the screed device 4 virtually follows the paver 2 when a road surface is produced. The screed device 4 is attached to the paver by a screed attachment unit 7. By means of the screed attachment unit 7, the screed device 4 can be lifted up in a transport position when not paving (not shown) or lowered down into a paving position for paving as shown in Figure 1. Accordingly, the screed attachment unit 7 is usually attached to the electric paver 2 by some kind of lifting device 8, which is configured to lift the screed device 4 up in the transport position or lower it down in the paving position. Further, the screed attachment unit 7 allows to adjust the angle at which the screed device 4 rests on the surface to be produced. To achieve this, the screed attachment unit 7 comprises some kind of angle adjustment device 9, which allows to adjust the angle at which the screed device 4 rests on the surface to be produced.

The two screed units 5 arranged in the middle, directly behind the paver 2, are also known as main screed units 5a. These two main screed units 5a are swivel mounted to the screed attachment unit 7 in such a manner that they can swivel around a swivel axis S that extends in the direction of travel T of the paver 2. This allows adjusting the slope of the road surface. Further, it can be seen that attached to each main screed unit 5a a displaceable screed unit 5b is attached comprising respective extensions to increase the width of the paver 2 for paving.

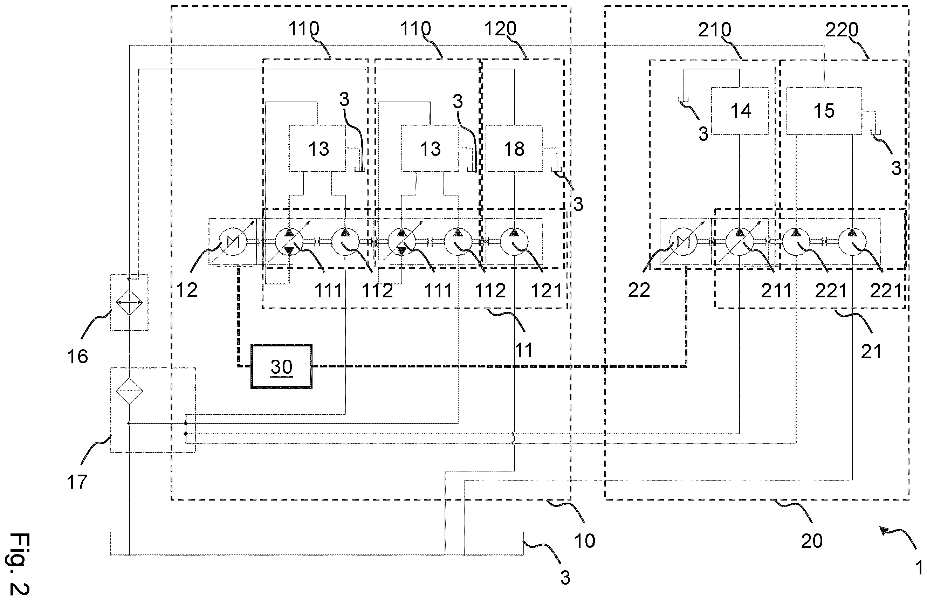

The electric paver 2 disclosed in Figure 1 may comprise a hydraulic paver system 1 as described in the following with respect to the preferred embodiment of the hydraulic paver system 1 viewed in Figure 2.

Figure 2 is a schematic circuit diagram of a preferred embodiment of the hydraulic paver system 1 of a paver 2, for example of the paver 2 as shown in Figure 1. The hydraulic paver system 1 is configured for operating the electric paver 2 in different operation modes.

The operation modes are at least a transporting mode and a paving mode.

In the transporting mode, the electric paver 2 is driven by means of the hydraulic paver system 1 from a first position to a second position without paving. For example, the hydraulic paver system 1 may be run in the transporting mode to unload the electric paver 2 from a truck and to drive the electric paver 2 to the place of the construction site where the road surface construction is to start. In another example, the hydraulic paver system 1 may be run in the transporting mode in order to drive the electric paver 2 to and on the truck after having finished the road construction. Finally, in a further example, the hydraulic paver system 1 may be run in the transporting mode to drive the electric paver 2 to a parking position or to drive the electric paver 2 from a parking position to the place of the construction site where the road construction is to start. In all of these examples, the paver 2 is driven between different locations without conducting paving operations.

In the paving mode, the electric paver 2 is driven by means of the hydraulic paver system 1 from a first position to a second position whilst paving. Thus, operating the hydraulic paver system 1 in the paving mode means that the electric paver 2 is conducting paving operations whilst being driven. In the paving mode, a road surface is constructed by conducting the paving operations whilst driving the paver 2.

In order to operate the hydraulic paver system 1 and, thus, the electric paver 2 at least in these two operation modes, the hydraulic paver system 1 comprises a first hydraulic circuit 10 and a second hydraulic circuit 20, which can be controlled independently of each other. These two hydraulic circuits 10, 20 are disclosed in Figure 2.

As can be seen, the first hydraulic circuit 10 comprises a first hydraulic pump arrangement 11 that is configured for providing a hydraulic driving power to at least one driving device 13 for driving the electric paver 2. The first hydraulic pump arrangement 11 is coupled to a first electric motor unit 12. The first electric motor unit is configured for driving the first hydraulic pump arrangement 11 in the transporting mode as well as in the paving mode. Thus, the electric motor provides the hydraulic driving power need for both, when the hydraulic paver system 1 is operated in transporting mode as well when the hydraulic paver system 1 is operated in paving mode.

The second hydraulic circuit 20 comprises a second hydraulic pump arrangement 21. The second hydraulic pump arrangement 21 is configured for providing hydraulic working power for at least one working device of the electric paver 2 for paving. For this purpose, the second hydraulic pump arrangement 21 is coupled to a second electric motor unit 12. The second electric motor unit 12 is configured for driving the second hydraulic pump arrangement 21 in the paving mode for providing the hydraulic working power required when operated in the paving mode.

Depending on the operation mode, the first hydraulic circuit 10 and the second hydraulic circuit 20 of the hydraulic paver system 1 can be activated or deactivated. If the hydraulic paver system 1 is operated in the transporting mode, the first hydraulic circuit 10 is activated and the second hydraulic circuit 20 is deactivated by default. However, if the hydraulic paver system 1 is operated in the paving mode, both hydraulic circuits 10, 20, i.e. the first hydraulic circuit 10 and the second hydraulic circuit 20 are automatically activated by default.

It is to be understood that the deactivated second hydraulic circuit 20 provides a hydraulic standby power that is smaller than the hydraulic working power provided in the paving mode. However, it is particularly preferred, that deactivated means turned off, i.e. it is particularly preferred that in the transporting mode the second hydraulic circuit 20 is turned off automatically by default. In that case, if the second hydraulic circuit 20 is turned off the standby power is equal to zero as the second electric motor unit 12 is turned off and, thus, does not provide any speed and torque that would drive second hydraulic pump arrangement 21.

Accordingly, if the first hydraulic circuit 10 is deactivated, the first hydraulic circuit 10 provides a hydraulic standby power that is smaller than the hydraulic driving power. With respect to the first hydraulic circuit 10 it is particularly preferred, that deactivated means turned off as well, i.e. it is particularly preferred that the first hydraulic circuit 10 is turned off when deactivated. In that case, if the first hydraulic circuit 10 is turned off the standby power is equal to zero as the first electric motor unit 12 is turned off and, thus, does not provide any speed and torque that would drive first hydraulic pump arrangement 11.

In order to independently control the first hydraulic circuit 10 and the second hydraulic circuit 20, the hydraulic paver system 1 comprises a control unit 30. For this purpose, the control unit 30 is signalling coupled with the first hydraulic circuit 10 and the second hydraulic circuit 20. The control unit 30 is configured for operating the electric paver 2 in the different operation modes depending on an operation mode selection input. The operation mode selection input may usually be provided by the user or driver of the hydraulic paver system 1 and, thus, of the electric paver 2. The user or driver may provide the operation mode selection input via some kind of user interface, for example a touch screen, some kind of button or alike.

If the first hydraulic circuit 10 is activated, the first electric motor unit 12 is driving the first hydraulic pump arrangement 11. On the contrary, if the first hydraulic circuit 10 is deactivated, the first electric motor unit 12 is not driving the first hydraulic pump arrangement 11. Preferably in the deactivated first hydraulic circuit 10 the first electric motor unit 12 is deactivated.

If the second hydraulic circuit 20 is activated, the second electric motor unit 22 is driving the second hydraulic pump arrangement 21. On the contrary, if the second hydraulic circuit 20 is deactivated, the second electric motor unit 22 is not driving the second hydraulic pump arrangement 21. Preferably in the deactivated second hydraulic circuit 20 the second electric motor unit 22 is deactivated.

From the preferred embodiment shown in Figure 2 of the hydraulic paver system 1, it can be seen that the first hydraulic circuit 10 comprises two driving circuits 110. Each of the driving circuits 110 comprises two pumps, one variable displacement pump 111 and one fixed displacement pump 112. These pumps 111, 112 of the two driving circuits 110 are part of the first hydraulic pump arrangement 11. The variable displacement pump 111 and the fixed displacement pump 112 of each driving circuit 110 are connected in parallel on a driving shaft that is coupled to the first electric motor unit 12.

If the pumps of each driving circuit 110 are driven by the first electric motor unit 12, hydraulic fluid is drawn into the pumps on their input side and supplied to driving devices 13 each driving circuit 110 comprises. Each hydraulic driving device 13 is fluidically connected to the pumps of each driving circuit 110. In particular, each hydraulic driving device 13 is fluidically connected on their input side to the output side of the pumps of each driving circuit 110.

It is to be understood that the variable displacement pump 111 is part of some kind of closed loop hydraulic circuit and the fixed displacement pump 112 is part of some kind of open loop hydraulic circuit. In the closed loop hydraulic circuit a share of the hydraulic fluid that has been used to drive the hydraulic driving device 13 is supplied to the input side of the variable displacement pump 111. The remaining share of the hydraulic fluid that has been used to drive the hydraulic driving device 13 is supplied to the tank unit 3. In the open loop hydraulic circuit, hydraulic fluid is drawn into the stationary displacement pump 112 from the tank unit 3.

Thus, if the first electric motor unit 12 is activated and, thus, driven, the respective pumps that are coupled to the first electric motor unit 12 are driven accordingly depending on the speed and torque provided by the first electric motor unit 12. The driven pumps 111, 112 generate a respective flow of the hydraulic fluid that is used to drive the hydraulic driving device 13. The hydraulic driving device 13 is to be understood as some kind of hydraulic motor that may be coupled to the wheels of the electric paver 2 for driving the electric paver 2. The speed and torque of the hydraulic driving device 13 and of the wheels of the electric paver 2 and, thus, of the electric paver 2 depends on the speed and torque of the first electric motor unit 12 and on the stroke out of the variable displacement pump 111 of the driving circuit 110. It is obvious that the speed of the hydraulic driving device 13 and, thus, of the electric paver 2 may be varied by varying the speed of the first electric motor unit 12 and/or by varying the stroke out of the variable displacement pump 111.

Furthermore, it is preferred that the first hydraulic circuit 10 comprises one tamper circuit 120 that is at the same time a cooling circuit 120, which is, thus, also called tamper-cooling circuit 120. As can be seen, the tamper-cooling circuit 120 comprises one fixed displacement pump 121. This fixed displacement pump 121 of the tamper-cooling circuit 120 is also part of the first hydraulic pump arrangement 11. The fixed displacement pump 121 of the tamper-cooling circuit 120 is configured for providing a hydraulic tamping power to a tamping actuation device to actuate the tamping device 18 for tamping with the electric paver 2. Additionally, the fixed displacement pump 121 of the tamper-cooling circuit 120 is configured for providing a hydraulic flow to a cooling device 16 for cooling the hydraulic fluid of the first hydraulic circuit 10. The fixed displacement pump 121 of the tamper-cooling circuit 120 is connected in parallel to the remaining pumps of the first hydraulic pump arrangement 11 and also coupled to the first electric motor unit 12.

The speed of the fixed displacement pump 121 of the tamper-cooling circuit 120 is proportional to the speed of the first electric motor unit 12. Thus, the operation of the tamping device 18 is proportional to the speed the first electric motor unit 12.

It is to be understood that in the transporting mode, the tamper device 18 can be deactivated. This may be achieved by controlling a tamper control valve, which prevents a hydraulic flow to or through the tamper actuation device in the transporting mode and, thus, prevents actuation of tamper device 18 when not needed. Thus, it may be controlled that the tamper actuation device is only activated in paving mode for tamping the paving material provided to construct the road surface. Preferably, in the paving mode, the tamper actuation device is activated automatically by default.

It is to be understood that the fixed displacement pump 121 of the tamper-cooling circuit 120 is providing a flow of hydraulic fluid independent on whether the hydraulic paver system 1 or the electric paver 2 is operated in the transporting mode or the paving mode. The fixed displacement pump 121 of the tamper-cooling circuit 120 needs to run in each operation mode for cooling the hydraulic fluid that is circulated in the first hydraulic circuit 10. Thereby, at least a share of the hydraulic fluid is forwarded to the tank through the cooling device 16 and through a filtering device 17.

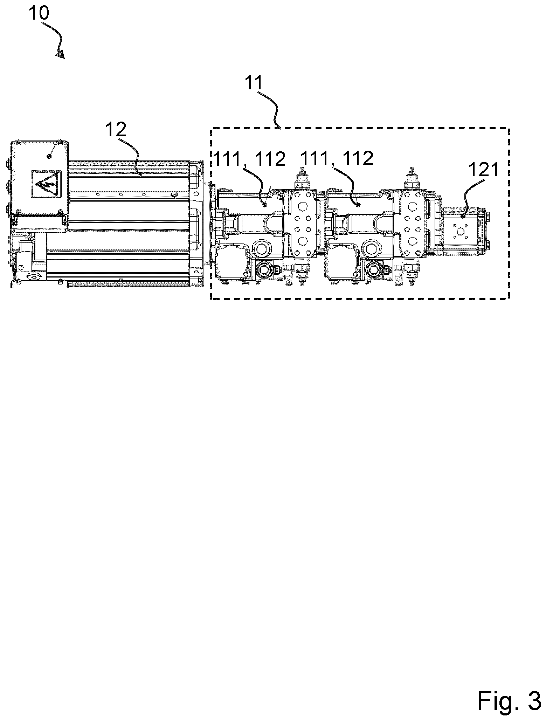

Figure 3 is a schematic view of the core components of a further embodiment of the first hydraulic circuit 10. Contrary to the embodiment of the first hydraulic circuit 10 shown in Figure 2, the first hydraulic circuit 10 of the embodiment shown in Figure 3 comprises just one driving circuit 110. It can be seen that the first hydraulic pump arrangement 11 is directly coupled to the first electric motor unit 12. Further, Figure 3 illustrates the parallel connection of the variable displacement pump and the fixed displacement pump of the driving circuit 110 and of the fixed displacement pump 121 of the tamper-cooling circuit 120.

In this preferred embodiment of the hydraulic paver system 1 the second hydraulic circuit 20 comprises two hydraulic working circuits 210, 220.

In the paving mode, one of the two hydraulic working circuits 220 generates working power for a working device that is a hydraulic conveyor actuation device 15 for driving at least one conveyor device for conveying paving material along the direction of travel T of the electric paver 2 and a hydraulic auger actuation device 15 for driving an auger device for distributing the paving material crosswise to the direction of travel T of the electric paver 2. Accordingly, this hydraulic working circuit, which incorporates the auger circuit and the conveyor circuit in the same hydraulic circuit 220, is configured for providing hydraulic cylinder power and a hydraulic conveyor power for the hydraulic conveyor actuation device 15 for driving the conveyor device of the electric paver 2 and for the hydraulic auger actuation device 15 for driving the auger device of the electric paver 2.

In the paving mode, the other working hydraulic circuit is a so called cylinder circuit 210 that generates a hydraulic cylinder power as working power for the hydraulic cylinder actuation device 14 for lifting and extending a screed device 4 and its respective screed units 5, 5a, 5b and for opening and for closing the hopper 6.

From Figure 2 it can be seen that the cylinder circuit 210 comprises one variable displacement pump 211 that is coupled to the second electric motor unit 12. The conveyor circuit and the auger circuit are the same circuit 220 comprising two fixed displacement pumps 221 that are connected in parallel and coupled to the second electric motor unit 12. Further, the variable displacement pump 211 of the cylinder circuit 210 is connected in parallel with the two fixed displacement pumps 221 of the conveyor and auger circuit 220.

The second hydraulic circuit 20 comprises the hydraulic cylinder actuation device 14 wherein the hydraulic cylinder actuation device 14 is fluidically connected on its input side to the pump 211 of the cylinder circuit 210, so that the pump 211 delivers a hydraulic fluid in the direction of the hydraulic cylinder actuation device 14 during operation for actuating the screed device 4 and hopper 6. The output side of the hydraulic cylinder actuation device 14 is fluidically connected to the tank unit 3.

Further, the second hydraulic circuit 20 comprises the hydraulic auger actuation device and the hydraulic conveyor actuation device 15.

Both, the hydraulic auger actuation device and the hydraulic conveyor actuation device 15 are fluidically connected on its input side to the pumps 221 of the conveyor and auger circuit 220. These pumps 221 then deliver a hydraulic fluid in the direction of the hydraulic auger actuation device and the hydraulic conveyor actuation device 15 during operation to actuate the respective auger device and conveyor device. The output side of the hydraulic auger actuation device and the hydraulic conveyor actuation device 15 is fluidically connected to the tank unit 3, wherein a share of the hydraulic fluid is forwarded to the tank unit 3 through the cooling device 16 and through the filtering device 17.

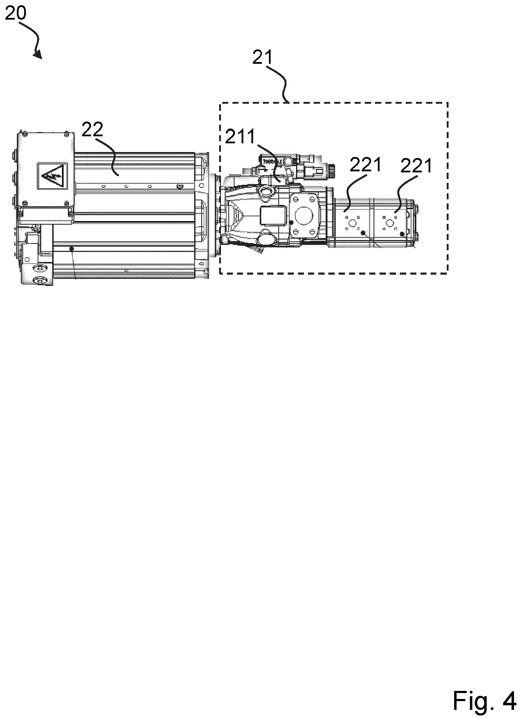

Figure 4 is a schematic view of the core components of the second hydraulic circuit 20 as schematically shown in the circuit diagram of the hydraulic system 1 in Figure 2. The schematic arrangement of the second hydraulic circuit 20 shows the parallel connection of the fixed displacement pumps 221 of the conveyor and auger circuit and the variable displacement pump 211 of the cylinder circuit 210 that are part of the second hydraulic pump arrangement 21 and coupled to the second electric motor unit 22.

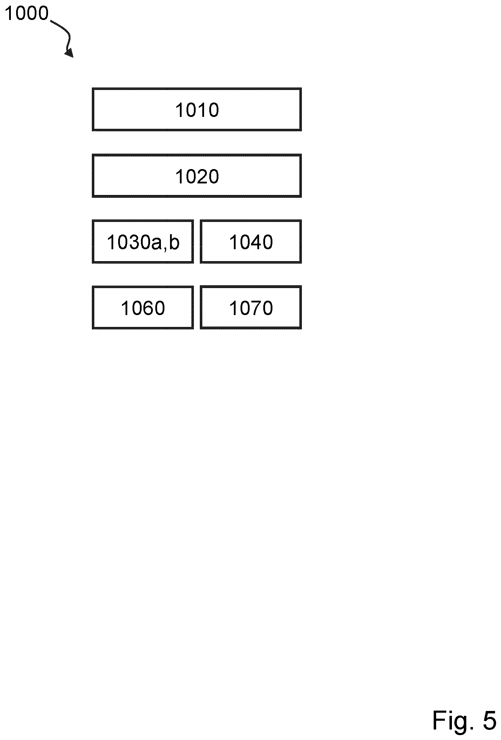

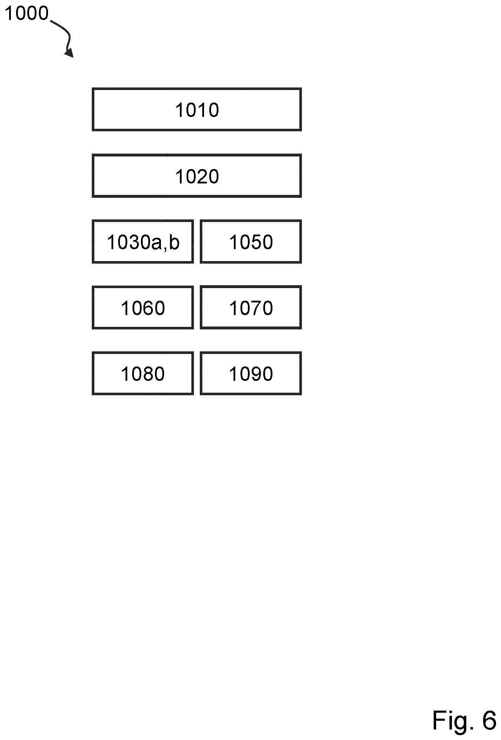

Figures 5 and 6 are a schematic block diagrams depicting detailed example steps for operating an electric paver according to preferred embodiments. Figure 5 depicts an example embodiment for controlling the electric paver 2 in a transporting mode. Figure 6 on the other hand depicts an example embodiment for controlling the electric paver 2 in a paving mode.

As disclosed in Figure 5, the method 1000 for controlling the hydraulic paver system 1 of the electric paver 2 in transporting mode comprises several steps described in the following:
The method includes the step of determining 1010 an operation mode selection input. This may step may be conducted by the user providing information on or selecting the desired operation mode. For example, the user may select on a touch screed or by means of some kind of button or alike the desired operation mode. Based on this selection the operation mode selection input is determined.

Depending on the determined operation mode selection input, i.e. for example, whether paving mode or transporting mode is determined as operation mode, the method comprises the step of switching 1020 to the respective operation mode of the electric paver 2.

When operating the electric paver 2 in the transporting mode is determined, the method comprises the step of providing a transporting mode actuation signal for activating 1030a a first hydraulic circuit 10 and deactivating 1040 a second hydraulic circuit 20. Further, when operating the electric paver 2 in the transporting mode, the travel speed of the electric paver 2 is controlled by controlling 1060 the speed of the first electric motor unit 12 and, preferably, by controlling 1070 a stroke out of a variable displacement pump 111 of a driving circuit 110 of the first hydraulic circuit 10. In that regard, a large stroke out leads to a larger flow of the hydraulic fluid and, thus, increases the travel speed further. If on the other hand, the stroke out is minimized, the flow of the hydraulic fluid is minimized and, thus, the travel speed decreased.

As disclosed in Figure 6, the method 1000 for controlling the hydraulic paver system 1 of the electric paver 2 in paving mode comprises several steps described in the following:
As described with respect to the steps of controlling the electric paver 2 in transporting mode,
The method includes the steps of determining 1010 an operation mode selection input and switching 1020 to the respective operation mode of the electric paver 2 depending on the determined operation mode selection input.

When operating the electric paver 2 in the paving mode is determined, the method comprises the step of providing a paving mode actuation signal for activating 1030b the first hydraulic circuit 10 and activating 1050 the second hydraulic circuit 20. Further, when operating the electric paver 2 in the paving mode, the travel speed of the electric paver 2 is controlled as described above with respect to the control of the travel speed when the electric paver 2 is operated in transporting mode, i.e. by controlling 1060 the speed of the first electric motor unit 12 and, preferably, by controlling 1070 a stroke out of a variable displacement pump 111 of a driving circuit 110 of the first hydraulic circuit 10.

When operating the electric paver 2 in the paving mode the method further comprises the step of controlling a working speed of at least one working device by controlling 1080 the speed of the second electric motor unit 22. Preferably, the speed of the second electric motor unit 22 is controlled depending on the travel speed of the electric paver 2. Further, the if the working circuit comprises a variable displacement pump 211, the working speed may also be controlled depending on the stroke out of the variable displacement pump 211. With respect to the hydraulic paver system 1 described above, the working speed of the hydraulic cylinder actuation device for actuating the screed device 4 and the hopper 6 may be varied, in addition to varying the speed of the second electric motor unit 22, by means of the variable displacement pump 211 that is part of the cylinder circuit 210. Further it is to be understood that the working speed of the second electric motor unit, preferably, is not only controlled depending on the traveling speed of the electric paver 2 but also depending on a paving width and a paving height of the road surface to be constructed.

### REFERENCE SIGNS

- 1: hydraulic paver system
- 2: electric paver
- 3: tank unit
- 4: screed device
- 5, 5a, 5b: screed units
- 6: hopper
- 7: screed attachment unit
- 8: lifting device
- 9: angle adjustment device
- 10: first hydraulic circuit
- 11: first hydraulic pump arrangement
- 12: first electric motor unit
- 13: hydraulic driving unit
- 14: hydraulic cylinder actuation device
- 15: hydraulic auger conveyor actuation device
- 16: cooling unit
- 17: filtering device
- 20: second hydraulic circuit
- 21: second hydraulic pump arrangement
- 22: second electric motor unit
- 110: driving circuit
- 111, 211: variable displacement pump
- 112, 121, 221: fixed displacement pump
- 120: tamper circuit
- 210: cylinder circuit
- 220: auger conveyor circuit
- S: swivel axis
- T: direction of travel

## Claims

1. A hydraulic paver system (1) for operating an electric paver (2) in different operation modes,
wherein the operation modes are at least a transporting mode and a paving mode that is different to the transporting mode, and
wherein the hydraulic paver system (1) comprises:
- a first hydraulic circuit (10) and a second hydraulic circuit (20), which can be controlled independently of each other, wherein
∘ the first hydraulic circuit (10) comprises a first hydraulic pump arrangement (11) that is configured for providing a hydraulic driving power to at least one driving device (13) for driving the electric paver (2), wherein the first hydraulic pump arrangement (11) is coupled to a first electric motor unit (12), which drives the first hydraulic pump arrangement (11) in a transporting mode and/or in a paving mode for providing the hydraulic driving power, and
∘ the second hydraulic circuit (20) comprises a second hydraulic pump arrangement (21) that is configured for providing hydraulic working power for at least one working device of the electric paver (2) for paving, wherein the second hydraulic pump arrangement (21) is coupled to a second electric motor unit (22), which drives the second hydraulic pump arrangement (21) in the paving mode for providing the hydraulic working power, and
- a control unit (30) that is signalling coupled with the first hydraulic circuit (10) and the second hydraulic circuit (20), wherein the control unit is configured for operating the electric paver (2) in the different operation modes depending on an operation mode selection input,
- wherein in the transporting mode the first hydraulic circuit (10) is activated and the second hydraulic circuit (20) is deactivated, wherein the deactivated second hydraulic circuit (20) provides a hydraulic standby power that is smaller than the hydraulic working power provided in the paving mode.

2. The hydraulic paver system (1) according to claim 1, wherein
- in the paving mode the first hydraulic circuit (10) is activated and the second hydraulic circuit (20) is activated, and/or
- in the transport mode,
∘ the second hydraulic circuit (20) is turned off, in particular turned off automatically by default, and/or
∘ the second hydraulic circuit (20) may be turned on manually by a user.

3. The hydraulic paver system (1) according to any one of the preceding claims 1 or 2, wherein
- in the activated first hydraulic circuit (10) the first electric motor unit (12) is driving the first hydraulic pump arrangement (11), and/or
- in the deactivated first hydraulic circuit (10) the first electric motor unit (12) is not driving the first hydraulic pump arrangement (11), wherein preferably in the deactivated first hydraulic circuit (10) the first electric motor unit (12) is deactivated, and/or
- in the activated second hydraulic circuit (20) the second electric motor unit (22) is driving the second hydraulic pump arrangement (21), and/or
- in the deactivated second hydraulic circuit (20) the second electric motor unit (12) is not driving the second hydraulic pump arrangement (11), wherein preferably in the deactivated second hydraulic circuit (20) the second electric motor unit (22) is deactivated.

4. The hydraulic paver system (1) according to any one of the preceding claims 1 to 3, wherein the first hydraulic circuit (10) comprises at least one driving circuit (110), preferably two driving circuits (110), wherein the at least one driving circuit (110) comprises at least one pump, preferably at least two pumps, in particular at least one variable displacement pump (111) and/or at least one fixed displacement pump (112), wherein the first hydraulic pump arrangement (11) comprises the at least one pump of the at least one driving circuit (110).

5. The hydraulic paver system (1) according to claim 4, wherein the at least one driving circuit (110) comprises at least two pumps, in particular the variable displacement pump (111) and the fixed displacement pump (112), which are connected in parallel.

6. The hydraulic paver system (1) according to any one of the preceding claims 1 to 5, wherein the first hydraulic circuit (10) comprises at least one tamper circuit and/or at least one cooling circuit (120), wherein
- the at least one tamper circuit (120) comprises a pump, preferably a fixed displacement pump (121), that is part of the first hydraulic pump arrangement (11), wherein the pump of the at least one tamper circuit (120) is configured for providing a hydraulic tamping power to a tamping device for tamping with the electric paver (2), and/or
- the at least one cooling circuit (120) comprises a pump, preferably a fixed displacement pump (121), that is part of the first hydraulic pump arrangement (11), wherein the pump of the at least one cooling circuit (120) is configured for providing a hydraulic flow to a cooling device (16) for cooling the hydraulic fluid of the first hydraulic circuit (10),
- wherein preferably, the at least one tamper circuit (120) and the at least one cooling circuit (120) are the same circuit (120).

7. The hydraulic paver system (1) according to any one of the preceding claims 4 to 6, wherein
- the pump (111, 112, 121) or the pumps (111, 112, 121) of the first hydraulic pump arrangement (11) are coupled to the first electric motor unit (12),
- wherein preferably, the pumps (111, 112, 121) of the first hydraulic pump arrangement (11) are coupled to the first electric motor unit (12), are connected in parallel.

8. The hydraulic paver system (1) according to any one of the preceding claims 1 to 7,
- wherein the working devices comprise
∘ at least one hydraulic conveyor actuation device (15) for driving at least one conveyor device for conveying paving material along the direction of travel (T) of the electric paver (2), wherein preferably, the paving material is conveyed in or against the direction of travel (T), and/or
∘ at least one hydraulic auger actuation device (15) for driving at least one auger device for distributing the paving material crosswise to the direction of travel (T) of the electric paver (2), and/or
∘ at least one hydraulic cylinder actuation device (14) for lifting and/or extending a screed device (5, 5a, 5b) of the electric paver (2) and/or for opening a hopper (6) and/or for closing the hopper (6), and/or
∘ at least one hydraulic tamper actuation device for driving at least one tamper device of the electric paver (2), and/or
- wherein the second hydraulic circuit (20) comprises at least one hydraulic working circuit (210, 220), preferably at least two hydraulic working circuits (210, 220),
∘ wherein the at least one hydraulic working circuit (210, 220) comprises at least one pump, and/or
∘ wherein the at least one hydraulic working circuit (210, 220) is at least one of the following:
▪ at least one conveyor circuit that is configured for providing hydraulic conveyor power for the at least one hydraulic conveyor actuation device (15) for driving the at least one conveyor device of the electric paver (2),
▪ at least one auger circuit that is configured for providing hydraulic auger power for the at least one hydraulic auger actuation device (15) for driving the at least one auger device of the electric paver (2),
▪ at least one cylinder circuit (210) that is configured for providing hydraulic cylinder power for the at least one hydraulic cylinder actuation device (14) for lifting and/or extending the screed device (4) of the electric paver (2) and/or for closing the hopper (6) and/or for opening the hopper (6), and
▪ at least one tamper circuit that is configured for providing hydraulic tamper power for the at least one hydraulic tamper actuation device for driving the tamper device of the electric paver (2),
▪ at least one vibration circuit that is configured for providing hydraulic vibration power for the at least one hydraulic vibration actuation device for driving the vibration device of the electric paver,
▪ wherein preferably the at least one auger circuit and the at least one conveyor circuit are the same hydraulic circuit (220).

9. The hydraulic paver system (1) according to any one of the preceding claims 1 to 8, wherein
- the at least one cylinder circuit (210) comprises a pump, preferably a variable displacement pump (211), and/or
- the at least one conveyor circuit comprises a pump, preferably a fixed displacement pump (221),
- the at least one auger circuit comprises a pump, preferably a fixed displacement pump (221),
- wherein preferably, in the case the at least one auger circuit and the at least one conveyor circuit are the same hydraulic circuit (220), the pumps (221) of the at least one conveyor circuit and the at least one auger circuit (220) are connected in parallel.

10. The hydraulic paver system (1) according to any one of the preceding claims 1 to 9, wherein
- the pump (211) of the at least one cylinder circuit (210) and/or the pump (221) of the at least one auger circuit and/or the pump (221) of the at least one conveyor circuit and/or the pump of the at least one tamper circuit are coupled to the second electric motor unit (22),
- wherein preferably, the pumps (211, 221) of the at least one cylinder circuit (210) and/or of the at least one auger circuit and/or the at least one conveyor circuit and/or the pump of the at least one tamper circuit are connected in parallel.

11. The hydraulic paver system (1) according to claim 4 and any one of the preceding claims 1 to 10, wherein
- the first hydraulic circuit (10) comprises at least one hydraulic driving device (13), preferably two hydraulic driving devices (13), wherein each hydraulic driving device (13) is fluidically connected on their input side to the at least one pump of the at least one driving circuit (110), so that the pump (111, 112) of the respective at least one driving circuit (110) delivers a hydraulic fluid in the direction of the hydraulic driving device (13) during operation of the electric paver (2),
- wherein the output side of each hydraulic driving device (13) is fluidically connected to the input side of the at least one pump of the at least one driving circuit (110) and/or a tank unit (3).

12. The hydraulic paver system (1) according to claim 6 and any one of the preceding claims 1 to 11, wherein
- the first hydraulic circuit (10) comprises the hydraulic tamper actuation device, wherein the hydraulic tamper actuation device is fluidically connected on its input side to the pump of the respective at least one tamper circuit, so that the pump of the respective at least one tamper circuit (120) delivers a hydraulic fluid in the direction of the hydraulic tamper actuation device during operation of the paver, wherein the output side of each hydraulic tamper actuation device is fluidically connected to the tank unit (3), wherein preferably, a share of the hydraulic fluid is forwarded to the tank through the cooling device (16) and/or through a filtering device (17).

13. The hydraulic paver system (1) according to any one of the preceding claims 1 to 12, wherein
- the second hydraulic circuit (20) comprises the hydraulic cylinder actuation device (14), wherein the hydraulic cylinder actuation device (14) is fluidically connected on its input side to the pump (211) of the respective at least one cylinder circuit (210), so that the pump (211) delivers a hydraulic fluid in the direction of the hydraulic cylinder actuation device (14) during operation, wherein the output side of each hydraulic cylinder actuation device (14) is fluidically connected to the tank unit (3), and/or
- the second hydraulic circuit (20) comprises the hydraulic auger actuation device (15), wherein the hydraulic auger actuation device (15) is fluidically connected on its input side to the pump (221) of the respective at least one auger circuit (220), so that the pumps (221) delivers a hydraulic fluid in the direction of the hydraulic auger actuation device (15) during operation, wherein the output side of each hydraulic auger actuation device (15) is fluidically connected to the tank unit (3), wherein preferably, a share of the hydraulic fluid is forwarded to the tank unit (3) through the cooling device (16) and/or through the filtering device (17), and/or
- the second hydraulic circuit (20) comprises the hydraulic conveyor actuation device (15), wherein the hydraulic conveyor actuation device (15) is fluidically connected on its input side to the pump (221) of the respective at least one conveyor circuit (220), so that the pumps (221) delivers a hydraulic fluid in the direction of the hydraulic conveyor actuation device (15) during operation, wherein the output side of each hydraulic conveyor actuation device (15) is fluidically connected to the tank unit (3), wherein preferably, a share of the hydraulic fluid is forwarded to the tank unit (3) through the cooling device (16) and/or through the filtering device (17).

14. An electric paver (2) for constructing a road surface, said paver comprising a hydraulic paver system (1) according to any one of the preceding claims 1 to 13.

15. Method (1000) for operating an electric paver (2) according to preceding claim 14 in different operation modes, the method comprising following steps, wherein the steps are performed by the control unit (30) of the electric paver:
- determining (1010) an operation mode selection input, and
- switching (1020) to the respective operation mode of the electric paver (2) depending on the determined operation mode selection input, wherein the operation modes are at least a transporting mode and a paving mode that is different to the transporting mode, and
- when operating the electric paver (2) in the transporting mode
∘ providing a transporting mode actuation signal for activating (1030a) a first hydraulic circuit (10) and deactivating (1040) a second hydraulic circuit (20), and/or
- when operating the electric paver (2) in the paving mode
∘ providing a paving mode actuation signal for activating (1030b) the first hydraulic circuit (10) and activating (1050) the second hydraulic circuit (20).

16. Method according to preceding claim 15,
when operating the electric paver (2) in the transporting mode or the paving mode controlling a travel speed of the electric paver (2) by controlling (1060) the speed of the first electric motor unit (12) and/or preferably, if the first hydraulic circuit (10) comprises at least one driving circuit (110) with at least one variable displacement pump (111), controlling (1070) a stroke out of the at least one variable displacement pump (111).

17. Method according to preceding claims 15 or 16,
when operating the electric paver (2) in the paving mode controlling a working speed of at least one working device by controlling (1080) the speed of the second electric motor unit (22) and/or preferably depending on the travel speed of the electric paver (2) and, preferably, if the second hydraulic circuit (20) comprises at least one working circuit (210, 220) with at least one variable displacement pump (211), controlling (1090) a stroke out of the at least one variable displacement pump (211), depending on a paving width, a paving height and the paving speed.

18. A computer program comprising program code means for performing the steps of any of claims 15-17.

19. A computer readable medium carrying a computer program comprising program code means for performing the steps of any of claims 15-17 when said program is run on the control unit (30) of claim 15.

## Patentansprüche

1. Hydraulisches Fertigersystem (1) zum Betreiben eines elektrischen Fertigers (2) in verschiedenen Betriebsmodi,
wobei die Betriebsmodi mindestens ein Transportmodus und ein Fertigermodus, der sich von dem Transportmodus verschieden ist, sind, und
wobei das hydraulische Fertigersystem (1) umfasst:
- einen ersten Hydraulikkreis (10) und einen zweiten Hydraulikkreis (20), die unabhängig voneinander gesteuert werden können, wobei
∘ der erste Hydraulikkreislauf (10) eine erste hydraulische Pumpenanordnung (11) umfasst, die zur Bereitstellung einer hydraulischen Antriebsleistung für mindestens eine Antriebsvorrichtung (13) zum Antrieb des elektrischen Fertigers (2) ausgebildet ist, wobei die erste hydraulische Pumpenanordnung (11) mit einer ersten Elektromotoreinheit (12) gekoppelt ist, die die erste hydraulische Pumpenanordnung (11) in einem Transportmodus und/oder in einem Fertigermodus zur Bereitstellung der hydraulischen Antriebsleistung antreibt, und
∘ der zweite Hydraulikkreislauf (20) eine zweite hydraulische Pumpenanordnung (21) umfasst, die zur Bereitstellung einer hydraulischen Arbeitsleistung für mindestens eine Arbeitseinrichtung des elektrischen Fertigers (2) zum Fertigen ausgebildet ist, wobei die zweite hydraulische Pumpenanordnung (21) mit einer zweiten Elektromotoreinheit (22) gekoppelt ist, die die zweite hydraulische Pumpenanordnung (21) im Fertigermodus zur Bereitstellung der hydraulischen Arbeitsleistung antreibt, und
- eine Steuereinheit (30), die mit dem ersten Hydraulikkreis (10) und dem zweiten Hydraulikkreis (20) signaltechnisch gekoppelt ist, wobei die Steuereinheit zum Betreiben des elektrischen Fertigers (2) in den verschiedenen Betriebsmodi in Abhängigkeit von einer Betriebsmoduswahleingabe ausgebildet ist,
- wobei im Transportmodus der erste Hydraulikkreis (10) aktiviert und der zweite Hydraulikkreis (20) deaktiviert ist, wobei der deaktivierte zweite Hydraulikkreis (20) eine hydraulische Standby-Leistung bereitstellt, die kleiner ist als die im Fertigermodus bereitgestellte hydraulische Arbeitsleistung.

2. Hydraulisches Fertigersystem (1) nach Anspruch 1, **dadurch gekennzeichnet, dass**
- im Fertigermodus der erste Hydraulikkreis (10) und der zweite Hydraulikkreis (20) aktiviert werden, und/oder
- im Transportmodus,
∘ der zweite Hydraulikkreislauf (20) ausgeschaltet wird, insbesondere standardmäßig automatisch ausgeschaltet wird, und/oder
∘ der zweite Hydraulikkreis (20) von einem Benutzer manuell eingeschaltet werden kann.

3. Hydraulisches Fertigersystem (1) nach einem der vorhergehenden Ansprüche 1 oder 2, wobei
- in dem aktivierten ersten Hydraulikkreislauf (10) die erste Elektromotoreinheit (12) die erste hydraulische Pumpenanordnung (11) antreibt, und/oder
- in dem deaktivierten ersten Hydraulikkreislauf (10) die erste Elektromotoreinheit (12) die erste hydraulische Pumpenanordnung (11) nicht antreibt, wobei vorzugsweise in dem deaktivierten ersten Hydraulikkreislauf (10) die erste Elektromotoreinheit (12) deaktiviert ist, und/oder
- in dem aktivierten zweiten Hydraulikkreislauf (20) die zweite Elektromotoreinheit (22) die zweite hydraulische Pumpenanordnung (21) antreibt, und/oder
- in dem deaktivierten zweiten Hydraulikkreislauf (20) die zweite Elektromotoreinheit (12) die zweite hydraulische Pumpenanordnung (11) nicht antreibt, wobei vorzugsweise in dem deaktivierten zweiten Hydraulikkreislauf (20) die zweite Elektromotoreinheit (22) deaktiviert ist.

4. Hydraulisches Fertigersystem (1) nach einem der vorhergehenden Ansprüche 1 bis 3, wobei der erste Hydraulikkreislauf (10) mindestens einen Antriebskreislauf (110), vorzugsweise zwei Antriebskreisläufe (110) umfasst, wobei der mindestens eine Antriebskreislauf (110) mindestens eine Pumpe, vorzugsweise mindestens zwei Pumpen, insbesondere mindestens eine Verstellpumpe (111) und/oder mindestens eine Konstantpumpe (112), umfasst, wobei die erste hydraulische Pumpenanordnung (11) die mindestens eine Pumpe des mindestens einen Antriebskreislaufs (110) umfasst.

5. Hydraulisches Fertigersystem (1) nach Anspruch 4, wobei der mindestens eine Antriebskreislauf (110) mindestens zwei Pumpen, insbesondere die Verstellpumpe (111) und die Konstantpumpe (112), umfasst, die parallel geschaltet sind.

6. Hydraulisches Fertigersystem (1) nach einem der vorhergehenden Ansprüche 1 bis 5, wobei der erste Hydraulikkreislauf (10) mindestens einen Tamperkreislauf und/oder mindestens einen Kühlkreislauf (120) umfasst, wobei
- der mindestens eine Tamperkreislauf (120) eine Pumpe, vorzugsweise eine Konstantpumpe (121), umfasst, die Teil der ersten hydraulischen Pumpenanordnung (11) ist, wobei die Pumpe des mindestens einen Tamperkreislaufs (120) zur Bereitstellung einer hydraulischen Tamperleistung für eine Tampervorrichtung zum Tampern mit dem elektrischen Fertiger (2) ausgebildet ist, und/oder
- der mindestens eine Kühlkreislauf (120) eine Pumpe, vorzugsweise eine Konstantpumpe (121), umfasst, die Teil der ersten hydraulische Pumpenanordnung (11) ist, wobei die Pumpe des mindestens einen Kühlkreislaufs (120) zur Bereitstellung eines hydraulischen Flusses zu einer Kühlvorrichtung (16) zum Kühlen der Hydraulikflüssigkeit des ersten Hydraulikkreislaufs (10) ausgebildet ist,
- wobei vorzugsweise der mindestens eine Tamperkreislauf (120) und der mindestens eine Kühlkreislauf (120) derselbe Kreislauf (120) sind.

7. Hydraulisches Fertigersystem (1) nach einem der vorhergehenden Ansprüche 4 bis 6,
- wobei die Pumpe (111, 112, 121) oder die Pumpen (111, 112, 121) der ersten hydraulischen Pumpenanordnung (11) mit der ersten Elektromotoreinheit (12) gekoppelt sind,
- wobei vorzugsweise die Pumpen (111, 112, 121) der ersten hydraulische Pumpenanordnung (11) mit der ersten Elektromotoreinheit (12) gekoppelt sind, parallel geschaltet sind.

8. Hydraulisches Fertigersystem (1) nach einem der vorhergehenden Ansprüche 1 bis 7,
- wobei die Arbeitseinrichtung umfasst
∘ mindestens eine hydraulische Förderbandbetätigungseinrichtung (15) zum Antreiben mindestens einer Fördereinrichtung zum Fördern von Fertigermaterial entlang der Fahrtrichtung (T) des elektrischen Fertigers (2), wobei vorzugsweise das Fertigermaterial in oder gegen die Fahrtrichtung (T) gefördert wird, und/oder
∘ mindestens eine hydraulische Schneckenbetätigungseinrichtung (15) zum Antreiben mindestens einer Schneckeneinrichtung zum Verteilen des Fertigermaterials quer zur Fahrtrichtung (T) des elektrischen Fertigers (2), und/oder
∘ mindestens eine Hydraulikzylinder-Betätigungseinrichtung (14) zum Anheben und/oder Ausfahren einer Bohleneinrichtung (5, 5a, 5b) des elektrischen Fertigers (2) und/oder zum Öffnen eines Behälters (6) und/oder zum Schließen des Behälters (6), und/oder
∘ mindestens eine hydraulische Tamperbetätigungseinrichtung zum Antreiben mindestens einer Tampereinrichtung des elektrischen Fertigers (2) und/oder
- wobei der zweite Hydraulikkreis (20) mindestens einen hydraulischen Arbeitskreislauf (210, 220), vorzugsweise mindestens zwei hydraulische Arbeitskreisläufe (210, 220) umfasst,
∘ wobei der mindestens eine hydraulische Arbeitskreislauf (210, 220) mindestens eine Pumpe umfasst, und/oder
∘ wobei der mindestens eine hydraulische Arbeitskreislauf (210, 220) mindestens einer der folgenden ist:
▪ mindestens einen Förderkreislauf, der zur Bereitstellung von hydraulischer Förderleistung für die mindestens eine hydraulische Förderbetätigungseinrichtung (15) zum Antrieb der mindestens einen Fördereinrichtung des elektrischen Fertigers (2) ausgebildet ist,
▪ mindestens einen Schneckenkreislauf, der zur Bereitstellung von hydraulischer Schneckenleistung für die mindestens eine hydraulische Schneckenbetätigungsvorrichtung (15) zum Antreiben der mindestens einen Schneckenvorrichtung des elektrischen Fertigers (2) ausgebildet ist,
▪ mindestens einen Zylinderkreislauf (210), der zur Bereitstellung von Hydraulikzylinderleistung für die mindestens eine Hydraulikzylinder-Betätigungseinrichtung (14) zum Anheben und/oder Ausfahren der Bohleneinrichtung (4) des elektrischen Fertigers (2) und/oder zum Schließen des Behälters (6) und/oder zum Öffnen des Behälters (6) ausgebildet ist, und
▪ mindestens einen Tamperkreislauf, der zur Bereitstellung von hydraulischer Tamperleistung für die mindestens eine hydraulische Tamperbetätigungsvorrichtung zum Antreiben der Tampervorrichtung des elektrischen Fertigers (2) ausgebildet ist,
▪ mindestens einen Vibrationskreislauf, der zur Bereitstellung von hydraulischer Vibrationsleistung für die mindestens eine hydraulische Vibrationsbetätigungsvorrichtung zum Antreiben der Vibrationsvorrichtung des elektrischen Fertigers ausgebildet ist,
▪ wobei vorzugsweise der mindestens eine Schneckenkreislauf und der mindestens ein Förderkreislauf derselbe hydraulische Kreislauf (220) sind.

9. Hydraulisches Fertigersystem (1) nach einem der vorhergehenden Ansprüche 1 bis 8, wobei
- der mindestens eine Zylinderkreislauf (210) eine Pumpe, vorzugsweise eine Verstellpumpe (211), umfasst, und/oder
- der mindestens einen Förderkreislauf eine Pumpe, vorzugsweise eine Konstantpumpe (221), umfasst,
- der mindestens eine Schneckenkreislauf eine Pumpe, vorzugsweise eine Konstantpumpe (221), umfasst
- wobei vorzugsweise in dem Fall, dass der mindestens eine Schneckenkreislauf und der mindestens eine Förderkreislauf derselbe Hydraulikkreislauf (220) sind, die Pumpen (221) des mindestens einen Förderkreislaufs und des mindestens einen Schneckenkreislaufs (220) parallel geschaltet sind.

10. Hydraulisches Fertigersystem (1) nach einem der vorhergehenden Ansprüche 1 bis 9, wobei
- die Pumpe (211) des mindestens einen Zylinderkreislaufs (210) und/oder die Pumpe (221) des mindestens einen Schneckenkreislaufs und/oder die Pumpe (221) des mindestens einen Förderkreislaufs und/oder die Pumpe des mindestens einen Tamperkreislaufs mit der zweiten Elektromotoreinheit (22) gekoppelt sind,
- wobei vorzugsweise die Pumpen (211, 221) des mindestens einen Zylinderkreislaufs (210) und/oder des mindestens einen Schneckenkreislaufs und/oder des mindestens einen Förderkreislaufs und/oder die Pumpe des mindestens einen Tamperkreislaufs parallel geschaltet sind.

11. Hydraulisches Fertigersystem (1) nach Anspruch 4 und einem der vorhergehenden Ansprüche 1 bis 10, wobei
- der erste Hydraulikkreis (10) mindestens eine hydraulische Antriebsvorrichtung (13), vorzugsweise zwei hydraulische Antriebsvorrichtungen (13), umfasst, wobei jede hydraulische Antriebsvorrichtung (13) eingangsseitig mit der mindestens einen Pumpe des mindestens einen Antriebskreises (110) fluidtechnisch verbunden ist, so dass die Pumpe (111, 112) des jeweiligen mindestens einen Antriebskreises (110) während des Betriebs des elektrischen Fertigers (2) ein Hydraulikfluid in Richtung der hydraulischen Antriebsvorrichtung (13) fördert,
- wobei die Ausgangsseite jeder hydraulischen Antriebsvorrichtung (13) mit der Eingangsseite der mindestens einen Pumpe des mindestens einen Antriebskreises (110) und/oder einer Tankeinheit (3) fluidtechnisch verbunden ist.

12. Hydraulisches Fertigersystem (1) nach Anspruch 6 und einem der vorhergehenden Ansprüche 1 bis 11, wobei
- der erste Hydraulikkreislauf (10) die hydraulische Tamperbetätigungseinrichtung umfasst, wobei die hydraulische Tamperbetätigungseinrichtung eingangsseitig mit der Pumpe des jeweiligen mindestens einen Tamperkreislaufs fluidtechnisch verbunden ist, so dass die Pumpe des jeweiligen mindestens einen Tamperkreislaufs (120) während des Betriebs des Fertigers ein Hydraulikfluid in Richtung der hydraulischen Tamperbetätigungseinrichtung fördert, wobei die Ausgangsseite jeder hydraulischen Tamperbetätigungseinrichtung mit der Tankeinheit (3) fluidtechnisch verbunden ist, wobei vorzugsweise ein Teil der Hydraulikflüssigkeit durch die Kühleinrichtung (16) und/oder durch eine Filtereinrichtung (17) dem Tank zugeführt wird.

13. Hydraulisches Fertigersystem (1) nach einem der vorhergehenden Ansprüche 1 bis 12, wobei
- der zweite Hydraulikkreis (20) die Hydraulikzylinder-Betätigungseinrichtung (14) umfasst, wobei die Hydraulikzylinder-Betätigungseinrichtung (14) eingangsseitig mit der Pumpe (211) des jeweiligen mindestens einen Zylinderkreises (210) fluidtechnisch verbunden ist, so dass die Pumpe (211) im Betrieb eine Hydraulikflüssigkeit in Richtung der Hydraulikzylinder-Betätigungseinrichtung (14) fördert (14) fördert, wobei die Pumpe (211) während des Betriebs eine Hydraulikflüssigkeit in Richtung der Hydraulikzylinder-Betätigungseinrichtung (14) fördert, wobei jede Hydraulikzylinder-Betätigungseinrichtung (14) ausgangsseitig mit der Tankeinheit (3) fluidtechnisch verbunden ist, und/oder
- der zweite Hydraulikkreislauf (20) die hydraulische Schneckenbetätigungsvorrichtung (15) umfasst, wobei die hydraulische Schneckenbetätigungsvorrichtung (15) eingangsseitig mit der Pumpe (221) des jeweiligen mindestens einen Schneckenkreislaufs (220) fluidtechnisch verbunden ist, so dass die Pumpen (221) im Betrieb ein Hydraulikfluid in Richtung der hydraulischen Schneckenbetätigungsvorrichtung (15) fördern, wobei die Ausgangsseite jeder hydraulischen Schneckenbetätigungseinrichtung (15) fluidtechnisch mit der Tankeinheit (3) fluidtechnisch verbunden ist, wobei vorzugsweise ein Teil der Hydraulikflüssigkeit durch die Kühleinrichtung (16) und/oder durch die Filtereinrichtung (17) der Tankeinheit (3) zugeführt wird, und/oder
- der zweite Hydraulikkreislauf (20) die hydraulische Fördererbetätigungseinrichtung (15) umfasst, wobei die hydraulische Fördererbetätigungseinrichtung (15) eingangsseitig mit der Pumpe (221) des jeweiligen mindestens einen Fördererkreislaufs (220) fluidtechnisch verbunden ist, so dass die Pumpen (221) während des Betriebs ein Hydraulikfluid in Richtung der hydraulischen Fördererbetätigungseinrichtung (15) fördern, wobei jede hydraulische Fördererbetätigungseinrichtung (15) ausgangsseitig mit der Tankeinheit (3) fluidtechnisch verbunden ist, wobei vorzugsweise ein Teil der Hydraulikflüssigkeit durch die Kühleinrichtung (16) und/oder durch die Filtereinrichtung (17) der Tankeinheit (3) zugeführt wird.

14. Elektrischer Straßenfertiger (2) zum Herstellen einer Straßenoberfläche, der Straßenfertiger umfassend ein hydraulisches Fertigersystem (1) nach einem der vorhergehenden Ansprüche 1 bis 13 umfasst.

15. Verfahren (1000) zum Betreiben eines elektrischen Fertigers (2) nach dem vorhergehendem Anspruch 14 in verschiedenen Betriebsmodi, wobei das Verfahren folgende Schritte umfasst, wobei die Schritte durchgeführt werden durch
die Steuereinheit (30) des elektrischen Fertigers:
- Bestimmen (1010) eines einer Betriebsmoduswahleingabe, und
- Umschalten (1020) auf den jeweiligen Betriebsmodus des elektrischen Fertigers (2) in Abhängigkeit von der ermittelten Betriebsmoduswahleingabe, wobei die Betriebsmodi mindest ein Transportmodus und ein vom Transportmodus verschiedener Fertigermodus sind, und
- beim Betreiben des elektrischen Fertigers (2) in dem Transportmodus
∘ Bereitstellen eines Transportmodus-Betätigungssignals zum Aktivieren (1030a) eines ersten Hydraulikkreislaufes (10) und Deaktivieren (1040) eines zweiten Hydraulikkreislaufes (20), und/oder
- beim Betrieb des elektrischen Fertigers (2) im Fertigermodus
∘ Bereitstellen eines Fertigermodus-Betätigungssignals zum Aktivieren (1030b) des ersten Hydraulikkreislaufes (10) und Aktivieren (1050) des zweiten Hydraulikkreislaufes (20).

16. Verfahren nach dem vorhergehenden Anspruch 15,
beim Betreiben des elektrischen Fertigers (2) im Transportmodus oder im Fertigermodus Steuern einer Fahrgeschwindigkeit des elektrischen Fertigers (2) durch Steuern (1060) der Geschwindigkeit der ersten Elektromotoreinheit (12) und/oder vorzugsweise, wenn der erste Hydraulikkreislauf (10) mindestens einen Antriebskreislauf (110) mit mindestens einer Verstellpumpe (111) umfasst, Steuern (1070) eines Hubes der mindestens einen Verstellpumpe (111).

17. Verfahren nach einem der vorhergehenden Ansprüche 15 oder 16,
beim Betreiben des elektrischen Fertigers (2) im Fertigermodus Steuern einer Arbeitsgeschwindigkeit mindestens einer Arbeitseinrichtung durch Steuern (1080) der Geschwindigkeit der zweiten Elektromotoreinheit (22) und/oder vorzugsweise in Abhängigkeit von der Fahrgeschwindigkeit des elektrischen Fertigers (2) und vorzugsweise, wenn der zweite Hydraulikkreislauf (20) mindestens einen Arbeitskreislauf (210, 220) mit mindestens einer Verstellpumpe (211) umfasst, Steuern (1090) eines Hubs der mindestens einen Verstellpumpe (211) in Abhängigkeit von einer Einbaubreite, einer Einbauhöhe und der Fertigergeschwindigkeit.

18. Computerprogramm mit Programmcodemitteln zur Durchführung der Schritte nach einem der Ansprüche 15-17.

19. Computerlesbares Medium, das ein Computerprogramm enthält, umfassend Programmcodemittel zur Durchführung der Schritte nach einem der Ansprüche 15 bis 17, wenn das Programm auf der Steuereinheit (30) nach Anspruch 15 ausgeführt wird.

## Revendications

1. Système hydraulique de finisseuse (1) pour faire fonctionner une finisseuse électrique (2) dans différents modes de fonctionnement,
dans lequel les modes de fonctionnement sont au moins un mode de transport et un mode de pavage qui est différent du mode de transport, et
dans lequel le système hydraulique de finisseuse (1) comprend :
- un premier circuit hydraulique (10) et un second circuit hydraulique (20), qui peuvent être commandés indépendamment l'un de l'autre, dans lequel
∘ le premier circuit hydraulique (10) comprend un premier agencement de pompe hydraulique (11) qui est configuré pour fournir une puissance d'entraînement hydraulique à au moins un dispositif d'entraînement (13) pour entraîner la finisseuse électrique (2), dans lequel le premier agencement de pompe hydraulique (11) est couplé à une première unité de moteur électrique (12), qui entraîne le premier agencement de pompe hydraulique (11) dans un mode de transport et/ou dans un mode de pavage pour fournir la puissance d'entraînement hydraulique, et
∘ le second circuit hydraulique (20) comprend un second agencement de pompe hydraulique (21) qui est configuré pour fournir une puissance de travail hydraulique à au moins un dispositif de travail de la finisseuse électrique (2) pour le pavage, dans lequel le second agencement de pompe hydraulique (21) est couplé à une seconde unité de moteur électrique (22), qui entraîne le second agencement de pompe hydraulique (21) dans le mode de pavage pour fournir la puissance de travail hydraulique, et
- une unité de commande (30) qui est couplée par signalisation au premier circuit hydraulique (10) et au second circuit hydraulique (20), dans lequel l'unité de commande est configurée pour faire fonctionner la finisseuse électrique (2) dans les différents modes de fonctionnement en fonction d'une entrée de sélection de mode de fonctionnement,
- dans lequel dans le mode de transport, le premier circuit hydraulique (10) est activé et le second circuit hydraulique (20) est désactivé, dans lequel le second circuit hydraulique désactivé (20) fournit une puissance de secours hydraulique qui est inférieure à la puissance de travail hydraulique fournie dans le mode de pavage.

2. Système hydraulique de finisseuse (1) selon la revendication 1, dans lequel
- en mode de pavage, le premier circuit hydraulique (10) est activé et le second circuit hydraulique (20) est activé, et/ou
- en mode de transport,
∘ le second circuit hydraulique (20) est mis à l'arrêt, en particulier mis à l'arrêt automatiquement par défaut, et/ou
∘ le second circuit hydraulique (20) peut être mis en marche manuellement par un utilisateur.

3. Système hydraulique de finisseuse (1) selon l'une quelconque des revendications précédentes 1 ou 2, dans lequel
- dans le premier circuit hydraulique activé (10), la première unité de moteur électrique (12) entraîne le premier agencement de pompe hydraulique (11), et/ou
- dans le premier circuit hydraulique désactivé (10), la première unité de moteur électrique (12) n'entraîne pas le premier agencement de pompe hydraulique (11), dans lequel de préférence dans le premier circuit hydraulique désactivé (10), la première unité de moteur électrique (12) est désactivée, et/ou
- dans le second circuit hydraulique activé (20), la seconde unité de moteur électrique (21) entraîne le second agencement de pompe hydraulique (21), et/ou
- dans le second circuit hydraulique désactivé (20), la seconde unité de moteur électrique (12) n'entraîne pas le second agencement de pompe hydraulique (11), dans lequel de préférence dans le second circuit hydraulique désactivé (20), la seconde unité de moteur électrique (22) est désactivée.

4. Système hydraulique de finisseuse (1) selon l'une quelconque des revendications précédentes 1 à 3, dans lequel le premier circuit hydraulique (10) comprend au moins un circuit d'entraînement (110), de préférence deux circuits d'entraînement (110), dans lequel l'au moins un circuit d'entraînement (110) comprend au moins une pompe, de préférence au moins deux pompes, en particulier au moins une pompe à cylindrée variable (111) et/ou au moins une pompe à cylindrée fixe (112), dans lequel le premier agencement de pompe hydraulique (11) comprend l'au moins une pompe de l'au moins un circuit d'entraînement (110).

5. Système hydraulique de finisseuse (1) selon la revendication 4, dans lequel l'au moins un circuit d'entraînement (110) comprend au moins deux pompes, en particulier la pompe à cylindrée variable (111) et la pompe à cylindrée fixe (112), qui sont reliées en parallèle.

6. Système hydraulique de finisseuse (1) selon l'une quelconque des revendications précédentes 1 à 5, dans lequel le premier circuit hydraulique (10) comprend au moins un circuit de dameur et/ou au moins un circuit de refroidissement (120), dans lequel
- l'au moins un circuit de dameur (120) comprend une pompe, de préférence une pompe à cylindrée fixe (121), qui fait partie du premier agencement de pompe hydraulique (11), dans lequel la pompe de l'au moins un circuit de dameur (120) est configurée pour fournir une puissance de damage hydraulique à un dispositif de damage pour le damage avec la finisseuse électrique (2), et/ou
- l'au moins un circuit de refroidissement (120) comprend une pompe, de préférence une pompe à cylindrée fixe (121), qui fait partie du premier agencement de pompe hydraulique (11), dans lequel la pompe de l'au moins un circuit de refroidissement (120) est configurée pour fournir un flux hydraulique à un dispositif de refroidissement (16) pour refroidir le fluide hydraulique du premier circuit hydraulique (10),
- dans lequel de préférence, l'au moins un circuit de dameur (120) et l'au moins un circuit de refroidissement (120) sont le même circuit (120),

7. Système hydraulique de finisseuse (1) selon l'une quelconque des revendications précédentes 4 à 6, dans lequel
- la pompe (111, 112, 121) ou les pompes (111, 112, 121) du premier agencement de pompe hydraulique (11) est/sont couplée(s) à la première unité de moteur électrique (12),
- dans lequel de préférence, les pompes (111, 112, 121) du premier agencement de pompe hydraulique (11) sont couplées à la première unité de moteur électrique (12), sont reliées en parallèle.

8. Système hydraulique de finisseuse (1) selon l'une quelconque des revendications précédentes 1 à 7,
- dans lequel les dispositifs de travail comprennent
∘ au moins un dispositif d'actionnement de convoyeur hydraulique (15) pour entraîner au moins un dispositif de convoyeur pour transporter le matériau de pavage le long de la direction de déplacement (T) de la finisseuse électrique (2), dans lequel de préférence, le matériau de pavage est transporté dans ou contre la direction de déplacement (T), et/ou
∘ au moins un dispositif d'actionnement de tarière hydraulique (15) pour entraîner au moins un dispositif de tarière pour distribuer le matériau de pavage transversalement à la direction de déplacement (T) de la finisseuse électrique (2), et/ou
∘ au moins un dispositif d'actionnement de vérin hydraulique (14) pour soulever et/ou étendre un dispositif de poutre lisseuse (5, 5a, 5b) de la finisseuse électrique (2) et/ou pour ouvrir une trémie (6) et/ou pour fermer la trémie (6), et/ou
∘ au moins un dispositif d'actionnement de dameur hydraulique pour entraîner au moins un dispositif de dameur de la finisseuse électrique (2), et/ou
- dans lequel le second circuit hydraulique (20) comprend au moins un circuit de travail hydraulique (210, 220), de préférence au moins deux circuits de travail hydrauliques (210, 220),
∘ dans lequel l'au moins un circuit de travail hydraulique (210, 220) comprend au moins une pompe, et/ou
∘ dans lequel l'au moins un circuit de travail hydraulique (210, 220) est au moins l'un de ce qui suit :
▪ au moins un circuit de convoyeur qui est configuré pour fournir une puissance de convoyeur hydraulique à l'au moins un dispositif d'actionnement de convoyeur hydraulique (15) pour entraîner l'au moins un dispositif de convoyeur de la finisseuse électrique (2),
▪ au moins un circuit de tarière qui est configuré pour fournir une puissance de tarière hydraulique à l'au moins un dispositif d'actionnement de tarière hydraulique (15) pour entraîner l'au moins un dispositif de tarière de la finisseuse électrique (2),
▪ au moins un circuit de vérin (210) qui est configuré pour fournir une puissance de vérin hydraulique à l'au moins un dispositif d'actionnement de vérin hydraulique (14) pour soulever et/ou étendre le dispositif de poutre lisseuse (4) de la finisseuse électrique (2) et/ou pour fermer la trémie (6) et/ou pour ouvrir la trémie (6), et
▪ au moins un circuit de dameur qui est configuré pour fournir une puissance de dameur hydraulique à l'au moins un dispositif d'actionnement de dameur hydraulique pour entraîner le dispositif de dameur de la finisseuse électrique (2),
▪ au moins un circuit de vibration qui est configuré pour fournir une puissance de vibration hydraulique à l'au moins un dispositif d'actionnement de vibration hydraulique pour entraîner le dispositif de vibration de la finisseuse électrique,
▪ dans lequel de préférence l'au moins un circuit de tarière et l'au moins un circuit de convoyeur sont le même circuit hydraulique (220).

9. Système hydraulique de finisseuse (1) selon l'une quelconque des revendications précédentes 1 à 8, dans lequel
- l'au moins un circuit de vérin (210) comprend une pompe, de préférence une pompe à cylindrée variable (211), et/ou
- l'au moins un circuit de convoyeur comprend une pompe, de préférence une pompe à cylindrée fixe (221),
- l'au moins un circuit de tarière comprend une pompe, de préférence une pompe à cylindrée fixe (221),
- dans lequel de préférence, dans le cas où l'au moins un circuit de tarière et l'au moins un circuit de convoyeur sont le même circuit hydraulique (220), les pompes (221) de l'au moins un circuit de convoyeur et de l'au moins un circuit de tarière (220) sont reliées en parallèle.

10. Système hydraulique de finisseuse (1) selon l'une quelconque des revendications précédentes 1 à 9, dans lequel
- la pompe (211) de l'au moins un circuit de vérin (210) et/ou la pompe (221) de l'au moins un circuit de tarière et/ou la pompe (221) de l'au moins un circuit de convoyeur et/ou la pompe de l'au moins un circuit de dameur sont couplées à la seconde unité de moteur électrique (22),
- dans lequel de préférence, les pompes (211, 221) de l'au moins un circuit de vérin (210) et/ou de l'au moins un circuit de tarière et/ou de l'au moins un circuit de convoyeur et/ou la pompe de l'au moins un circuit de dameur sont reliées en parallèle.

11. Système hydraulique de finisseuse (1) selon la revendication 4 et l'une quelconque des revendications précédentes 1 à 10, dans lequel
- le premier circuit hydraulique (10) comprend au moins un dispositif d'entraînement hydraulique (13), de préférence deux dispositifs d'entraînement hydrauliques (13), dans lequel chaque dispositif d'entraînement hydraulique (13) est relié fluidiquement sur son côté entrée à l'au moins une pompe de l'au moins un circuit d'entraînement (110), de sorte que la pompe (111, 112) de l'au moins un circuit d'entraînement (110) respectif refoule un fluide hydraulique en direction du dispositif d'entraînement hydraulique (13) pendant le fonctionnement de la finisseuse électrique (2),
- dans lequel le côté sortie de chaque dispositif d'entraînement hydraulique (13) est relié fluidiquement au côté entrée de l'au moins une pompe de l'au moins un circuit d'entraînement (110) et/ou à une unité de réservoir (3).

12. Système hydraulique de finisseuse (1) selon la revendication 6 et l'une quelconque des revendications précédentes 1 à 11, dans lequel
- le premier circuit hydraulique (10) comprend le dispositif d'actionnement de dameur hydraulique, dans lequel le dispositif d'actionnement de dameur hydraulique est relié fluidiquement sur son côté entrée à la pompe de l'au moins un circuit de dameur respectif, de sorte que la pompe de l'au moins un circuit de dameur respectif (120) refoule un fluide hydraulique en direction du dispositif d'actionnement de dameur hydraulique pendant le fonctionnement de la finisseuse, dans lequel le côté sortie de chaque dispositif d'actionnement de dameur hydraulique est relié fluidiquement à l'unité de réservoir (3), dans lequel de préférence, une partie du fluide hydraulique est acheminée vers le réservoir par l'intermédiaire du dispositif de refroidissement (16) et/ou par l'intermédiaire d'un dispositif de filtrage (17).

13. Système hydraulique de finisseuse (1) selon l'une quelconque des revendications précédentes 1 à 12, dans lequel
- le second circuit hydraulique (20) comprend le dispositif d'actionnement de vérin hydraulique (14), dans lequel le dispositif d'actionnement de vérin hydraulique (14) est relié fluidiquement sur son côté entrée à la pompe (211) de l'au moins un circuit de vérin respectif (210), de sorte que la pompe (211) refoule un fluide hydraulique en direction du dispositif d'actionnement de vérin hydraulique (14) pendant le fonctionnement, dans lequel le côté sortie de chaque dispositif d'actionnement de vérin hydraulique (14) est relié fluidiquement à l'unité de réservoir (3), et/ou
- le second circuit hydraulique (20) comprend le dispositif d'actionnement de tarière hydraulique (15), dans lequel le dispositif d'actionnement de tarière hydraulique (15) est relié fluidiquement sur son côté entrée à la pompe (221) de l'au moins un circuit de tarière respectif (220), de sorte que la pompe (221) refoule un fluide hydraulique en direction du dispositif d'actionnement de tarière hydraulique (15) pendant le fonctionnement, dans lequel le côté sortie de chaque dispositif d'actionnement de tarière hydraulique (15) est relié fluidiquement à l'unité de réservoir (3), dans lequel de préférence, une partie du fluide hydraulique est acheminée vers l'unité de réservoir (3) par l'intermédiaire du dispositif de refroidissement (16) et/ou par l'intermédiaire du dispositif de filtrage (17), et/ou
- le second circuit hydraulique (20) comprend le dispositif d'actionnement de convoyeur hydraulique (15), dans lequel le dispositif d'actionnement de convoyeur hydraulique (15) est relié fluidiquement sur son côté entrée à la pompe (221) de l'au moins un circuit de convoyeur respectif (220), de sorte que la pompe (221) refoule un fluide hydraulique en direction du dispositif d'actionnement de convoyeur hydraulique (15) pendant le fonctionnement, dans lequel le côté sortie de chaque dispositif d'actionnement de convoyeur hydraulique (15) est relié fluidiquement à l'unité de réservoir (3), dans lequel de préférence, une partie du fluide hydraulique est acheminée vers l'unité de réservoir (3) par l'intermédiaire du dispositif de refroidissement (16) et/ou par l'intermédiaire du dispositif de filtrage (17).

14. Finisseuse électrique (2) pour construire une surface de route, ladite finisseuse comprenant un système hydraulique de finisseuse (1) selon l'une quelconque des revendications précédentes 1 à 13.

15. Procédé (1000) de fonctionnement d'une finisseuse électrique (2) selon la revendication précédente 14 dans différents modes de fonctionnement, le procédé comprenant les étapes suivantes, dans lequel les étapes sont réalisées par l'unité de commande (30) de la finisseuse électrique :
- détermination (1010) d'une entrée de sélection de mode de fonctionnement, et
- commutation (1020) vers le mode de fonctionnement respectif de la finisseuse électrique (2) en fonction de l'entrée de sélection de mode de fonctionnement déterminée, dans lequel les modes de fonctionnement sont au moins un mode de transport et un mode de pavage qui est différent du mode de transport, et
- lors du fonctionnement de la finisseuse électrique (2) en mode de transport
∘ fourniture d'un signal d'actionnement de mode de transport pour activer (1030a) un premier circuit hydraulique (10) et désactiver (1040) un second circuit hydraulique (20), et/ou
- lors du fonctionnement de la finisseuse électrique (2) en mode de pavage
o fourniture d'un signal d'actionnement de mode de pavage pour activer (1030b) le premier circuit hydraulique (10) et activer (1050) le second circuit hydraulique (20).

16. Procédé selon la revendication précédente 15,
lors du fonctionnement de la finisseuse électrique (2) en mode de transport ou en mode de pavage, la commande d'une vitesse de déplacement de la finisseuse électrique (2) en commandant (1060) la vitesse de la première unité de moteur électrique (12) et/ou de préférence, si le premier circuit hydraulique (10) comprend au moins un circuit d'entraînement (110) avec au moins une pompe à cylindrée variable (111), la commande (1070) d'une course de l'au moins une pompe à cylindrée variable (111).

17. Procédé selon les revendications précédentes 15 ou 16,
lors du fonctionnement de la finisseuse électrique (2) en mode de pavage, la commande d'une vitesse de travail d'au moins un dispositif de travail en commandant (1080) la vitesse de la seconde unité de moteur électrique (22) et/ou de préférence en fonction de la vitesse de déplacement de la finisseuse électrique (2) et, de préférence, si le second circuit hydraulique (20) comprend au moins un circuit de travail (210, 220) avec au moins une pompe à cylindrée variable (211), la commande (1090) d'une course de l'au moins une pompe à cylindrée variable (211), en fonction d'une largeur de pavage, d'une hauteur de pavage et de la vitesse de pavage.

18. Programme informatique comprenant des moyens de code de programme pour réaliser les étapes de l'une des revendications 15 à 17.

19. Support lisible par ordinateur portant un programme informatique comprenant des moyens de code de programme pour réaliser les étapes de l'une des revendications 15 à 17 lorsque ledit programme est exécuté sur l'unité de commande (30) de la revendication 15.
